Europäisches Patentamt

European Patent Office

Office européen des brevets

(11) Veröffentlichungsnummer: **0 125 464**
**B1**

(12) # EUROPÄISCHE PATENTSCHRIFT

(45) Veröffentlichungstag der Patentschrift:
02.09.87

(21) Anmeldenummer: **84103781.5**

(22) Anmeldetag: **05.04.84**

(51) Int. Cl.⁴: **C 09 D  3/72,** C 08 G  18/12,
C 08 L  75/04, D 06 N  3/14,
D 06 N  3/00 //
(C08L75/04, 75:04, 61:00)

(54) **Lösungsmittelhaltige, vernetzerhaltige Beschichtungszubereitungen und ihre Verwendung zur thermoaktiven Einstrich-Umkehrbeschichtung.**

(30) Priorität: **13.04.83  DE 3313236**

(43) Veröffentlichungstag der Anmeldung:
**21.11.84 Patentblatt 84/47**

(45) Bekanntmachung des Hinweises auf die Patenterteilung:
**02.09.87 Patentblatt 87/36**

(84) Benannte Vertragsstaaten:
**BE DE FR GB IT NL**

(56) Entgegenhaltungen:
**EP-A-0 003 785**
**FR-A-2 236 053**

(73) Patentinhaber: **BAYER AG, Konzernverwaltung RP
Patentabteilung, D-5090 Leverkusen 1 Bayerwerk
(DE)**

(72) Erfinder: **Thoma, Wilhelm, Dr., Birkenweg 25,
D-5090 Leverkusen 31 (DE)**
Erfinder: **Pedain, Josef, Dr., Haferkamp 6, D-5000
Köln 80 (DE)**
Erfinder: **Schröer, Walter, Dr., Nicolai- Hartmann-
Strasse 29, D-5090 Leverkusen 1 (DE)**
Erfinder: **Kling, Waldemar, Sperberweg 1, D-5067
Kürten (DE)**

**Beschreibung**

Die Erfindung betrifft lösungsmittelhaltige, Vernetzerkombinationen enthaltende PU-Beschichtungszubereitungen und ein Verfahren zur Herstellung von Polyurethanbeschichtungen nach dem Einstrich-Thermoumkehrverfahren durch Rakeln der Polyurethanbeschichtungszubereitung auf einen einstweiligen Träger, Trocknen der Schicht und Kaschieren des textilen Substrats an vorzugsweise beheizten Preßwalzen und anschließendes Ausheizen bei erhöhten Temperaturen, indem man lösungsmittelhaltige, 20 bis 60 %ige Zubereitungen aus

einem Polyurethangemisch I, bestehend aus

A) relativ weichen Polyurethanen und

B) relativ harten Einkomponentenpolyurethanen

und einer Vernetzerkombination II) bestehend aus

C) Formaldehydharnstoff und/oder Formaldehydmelaminharzen und Vernetzungskatalysatoren und

D) aliphatischen und/oder aromatischen Polyisocyanaten, insbesondere blockierten Polyisocyanaten,

und gegebenenfalls Zusätzen von löslichen Celluloseestern, Griffmitteln, gegebenenfalls Oxyalkylengruppenhaltigen Polysiloxanen und weiteren üblichen Zusätzen wie Pigmenten verwendet.

Die derart erhaltenen Einstrich-Thermoumkehrbeschichtungen zeigen auf textilen Unterlagen durch die Mischvernetzung der ausgewählten Polyurethangemische überraschend hohe Trocken- und Naßhaftwerte und somit gute Artikelechtheiten.

Die Herstellung von Kunstleder für die verschiedenen Verwendungszwecke wie Oberbekleidung, Schuhobermaterial oder Täschnermaterial, aus Polyurethan-Rohstoffen im Transferverfahren ist Stand der Technik. Im allgemeinen wird ein Aufbauprinzip der Kunstleder aus zwei verschiedenen Schichten, Deck- und Haftstrich, Praktiziert. Die Feststoffauflagen pro Strich liegen im allgemeinen zwischen 20 bis 50 g/m². Als Rohstoffe dienen Lösungen von Einkomponenten und auch Zweikomponenten-Polyurethanen oder Polyurethandispersionen. Die Zweikomponenten-Polyurethane erhalten erst durch Polyisocyanat-Vernetzung ihren endgültigen Kunststoffcharakter.

Neuerer Stand der Technik zur Beschichtung textiler, bahnförmiger Unterlagen ist ein sogenanntes thermoaktives Einstrich-Umkehrverfahren. Hierbei wird die Streichpaste auf einen einstweiligen Träger, z. B. ein Trennpapier, gerakelt, das Lösungsmittel(gemisch) wird abgedampft, an einem beheizten Zylinder unter Walzenandruck das textile Substrat auf den trockenen, thermisch aktivierten Polyurethanfilm kaschiert und dieser anschließend bei höherer Temperatur vernetzt. Die Vorteile des thermoaktiven Einstrich-Umkehrverfahrens liegen in der möglichen niedrigen Auflagemenge, z. B. 15 bis 30 g/m², und damit in der Herstellbarkeit leichter Beschichtungsartikel. Besonders interessant ist in diesem Verfahren die Verwendbarkeit von Substraten, die sich für eine Lösungsmittelbeschichtung oder für die Direktbeschichtung von ihren Konstruktionen her oder ihren Löseeigenschaften (z. B. Polyacrylunterlagen oder sogenannte PU-Koagulate) her nicht oder weniger gut eignen. Auch lassen sich besonders leichte oder offenmaschige Gewebe ohne Gefahr des Durchkaschierens beschichten.

Nachteilig sind vor allem die Haftprobleme, die an nach dem Thermokativ-Einstrich-Umkehrverfahren hergestellten Artikeln beobachtet werden. Die Haftwerte sind schwankend und besonders die Naßhaftwerte relativ niedrig.

Aufgabe der Erfindung war es deshalb eine Zubereitung für das thermoaktive Einstrich-Umkehrbeschichtungsverfahren zur Verfügung zu stellen, die verbesserte Eigenschaften, insbesondere verbesserte Haftung der damit hergestellten Artikel zeigt. Diese Aufgabe wurde dadurch gelöst, daß eine spezielle Polyurethan-Kombination mit einer Kombination von Formaldehydvernetzern und Polyisocyanatvernetzern, vorzugsweise blockierten Polyisocyanaten, umgesetzt wird.

Die erfindungsgemäße Zusammensetzung der lösungsmittelhaltigen, Vernetzerkombinationen enthaltenden Polyurethanbeschichtungszubereitung zur Herstellung von Polyurethanbeschichtungen auf textilen Flächengebilden nach dem Einstrich-Umkehrverfahren ist demnach dadurch gekennzeichnet, daß die 20 bis 60 %, insbesondere 30 bis 50 %, Feststoff enthaltenden Zubereitungen in organischen Lösungsmitteln in ihrem Feststoff aus folgenden Komponenten bestehen:

I) 60 bis 97,5 Teilen eines Polyurethangemischs aus

A) 90 bis 60 Gew.-%, bezogen auf I, vorzugsweise 80 bis 70 Gew.-%, eines relativ weichen, nur mäßig hochmolekularen, im wesentlichen linearen Polyurethans und

B) 10 bis 40 Gew.-%, vorzugsweise 20 bis 30 Gew.-%, eines hochmolekularen, relativ harten Einkomponentenpolyurethans,

II) 2,5 bis 15 Teilen, vorzugsweise 4 bis 10 Teilen, einer Vernetzerkombination aus

C) 10 bis 60 Gew.-%, bezogen auf II), vorzugsweise 40 bis 80 Gew.-%, an Formaldehyd-Harzen, vorzugsweise Formaldehyd-Harnstoff- und/oder Melamin-Vernetzerharzen, und Vernetzungskatalysatoren und

D) 90 bis 40 Gew.-%, vorzugsweise 20 bis 60 Gew.-%, an aliphatischen und/oder aromatischen blockierten oder unblockierten Polyisocyanaten, vorzugsweise blockierten aromatischen Polyisocyanaten mit mindestens zwei Isocyanatfunktionen

und gegebenenfalls Zusätzen III) von

E) 0 bis 10 Teilen, vorzugsweise 0,1 bis 5 Teilen, Celluloseestern,

F) 0 bis 5 Teilen, vorzugsweise 0,3 bis 3 Teilen, Griffmitteln,

G) 0 bis 5 Teilen, vorzugsweise 0,1 bis 3,5 Teilen, Silikonen und

2

H) 0 bis 20 Teilen Pigmenten, Füllstoffen, Stabilisatoren und weiteren üblichen Zusätzen.

Bei den angegebenen Teilen handelt es sich um Gewichtsteile.

Weiterer Erfindungsgegenstand ist die Verwendung der vorgenannten Polyurethanbeschichtungszubereitungen zur Herstellung von Polyurethanbeschichtungen nach dem Einstrich-Thermo-Umkehrverfahren durch Aufbringen auf einen einstweiligen Träger, Trocknen der Schicht und Kaschieren des textilen Substrats an vorzugsweise beheizten Preßwalzen und anschließendes Ausheizen bei erhöhten Temperaturen.

Der Vorteil des erfindungsgemäßen Verfahrens zur Herstellung von leichten Polyurethanbeschichtungen nach dem Thermoaktiv-Einstrich-Umkehrverfahren resultiert aus der Mischvernetzung des Polyurethangemischs mit Formaldehydharzen und/oder Polyisocyanaten (in blockierter oder nicht blockierter Form), wobei vorteilhaft hohe Trocken- und Naßhaftwerte erreicht werden, was zu guten Echtheiten der Artikel führt, z. B. zu ausgezeichneten Wasch- und Chemisch-Reinigungsbeständigkeiten, Abriebfestigkeiten und Knickechtheiten.

Die hohen Haftwerte bei der Vernetzung der Polyurethanzubereitungen aus den Zwei- und Einkomponenten-Polyurethanen mit Gemischen aus Formaldehydharzen und Polyisocyanaten sind überraschend - sie sind aufgrund der mit den einzelnen Vernetzerarten gemachten Erfahrungen nicht zu erwarten.

Die Polyurethankomponente A) der Polyurethanmischung I) besteht aus relativ weichen, nur mäßig hochmolekularen Polyurethanen, welche erst durch eine zusätzliche Vernetzung mit Polyisocyanaten hochmolekularen Aufbau und hochwertige Polyurethaneigenschaften erreichen (sogenannte Zweikomponenten-Polyurethane).

Sie werden aus höhermolekularen Polyhydroxylverbindungen des Molekulargewichtsbereichs 600 bis 6000, vorzugsweise 800 bis 4000, aromatischen und/oder (cyclo)aliphatischen Polyisocyanaten und 0 bis 1,5 Mol an Kettenverlängerungsmitteln pro Mol höhermolekularer Polyhydroxylverbindung, vorzugsweise 0,2 bis 1,0 Mol, an Dialkoholen und/oder Aminoalkoholen und/oder Diaminen und/oder Hydrazinhydrat und/oder Dihydrazidverbindungen aufgebaut. Vorzugsweise erhält man ein NCO/XH-Verhältnis (XH sind die gegenüber Isocyanaten reaktiven Gruppen mit aktiven Wasserstoffatomen) von < 0,98, besonders < 0,96 bei der Herstellung ein oder bricht einen NCO-Überschuß durch monofunktionelle Kettenabbrecher ab. Die Umsetzung kann dabei in der Schmelze, vorzugsweise in mehrwelligen Reaktionsschneckenmaschinen, oder direkt in Lösung erfolgen.

Die Komponente B) der Polyurethan-Mischung I besteht aus hochmolekularen, relativ harten Polyurethanen, welche bereits ohne zusätzliche Vernetzung hochwertige Polyurethaneigenschaften und höhere Härte und höheren Erweichungsbereich sowie verminderte Löslichkeit zeigen (sogenannte Einkomponentenpolyurethane). Sie werden aus den wie in A) aufgeführten Komponenten aufgebaut, doch verwendet man pro Mol höhermolekularer Polyhydroxylverbindung mehr als 1,5 und bis etwa 6 Mol, bevorzugt 1,7 bis 5,2 Mol an bifunktionellen Kettenverlängerungsmitteln wie für A) aufgeführt. Vorzugsweise verwendet man etwa äquivalente oder gegebenenfalls leicht überschüssige Mengen an NCO gegen XH-Gruppen, d.h. zumeist ein NCO/XH-Verhältnis von ≥ 0,98 bis etwa 1,08, bevorzugt 1,0 bis 1,05.

Die Reaktionskomponenten für die Polyurethane A) oder B) sind die bekannten Verbindungen, wie sie in der Polyurethanchemie üblicherweise eingesetzt werden und vielfach beschrieben sind.

Die höhermolekularen Polyhydroxylverbindungen sind bevorzugt Dihydroxy-polyester, -polylactone, -polycarbonate, sowie -polyether, oder ihre Mischungen oder Mischkondensate.

Als Polyisocyanate werden bevorzugt aromatische und/oder (cyclo)aliphatische Diisocyanate eingesetzt, z. B. die isomeren Toluylendiisocyanate, Diphenyl-4,4'-diisocyanate, Diphenylmethan-4,4'-/2,4'- und/oder 2,2'-diisocyanate, 3,3'-Dimethyldiphenyl-4,4'-diisocyanat, Hexamethylendiisocyanat, Lysinesterdiisocyanat, Isophorondiisocyanat, Dicyclohexylmethan-4,4'-2,4'- und/oder -2,2'-diisocyanate in ihren Stereoisomeren oder Gemischen.

Als Kettenverlängerungsmittel dienen insbesondere das Butandiol-1,4, Butandiol-2,3, Ethylenglykol, 2,2-Dimethylpropandiol, Hydrochinon-bis-(2-hydroxyethyl)-ether, Terephthalsäure-bis-(2-hydroxyethyl)-ester oder auch Diamine wie Ethylendiamin, Hexandiamin, Isophorondiamin, Dicyclohexylmethan-4,4'-diamin oder auch Hydrazinhydrat oder Terephthalsäuredihydrazid oder β-Semicarbazido-propionsäurehydrazid.

Als Lösungsmittel für die Polyurethane dienen Dimethylformamid, Dimethylacetamid, N-Methylpyrrolidon, N-Methylacetamid und andere Amid- und/oder Harnstoff-haltige Lösungsmittel, vorzugsweise jedoch Dimethylformamid, ferner Tetrahydrofuran oder Dioxan, sowie Ketone wie Methylethylketon oder Ester wie Essigsäureethylester.

Bevorzugt werden Mischungen aus hochpolaren Lösungsmitteln wie z. B. Dimethylformamid und weniger polaren Lösungsmitteln wie Methylethylketon oder Essigester und gegebenenfalls aromatischen Kohlenwasserstoffen, z. B. Toluol oder Xylol eingesetzt. In bestimmten Fällen können auch Mischungen aus aromatischen Kohlenwasserstoffen und niedermolekularen Alkoholen, z. B. Toluol und Isopropanol als Lösungsmittel eingesetzt werden.

Die relativ niedermolekularen Zweikomponentenpolyurethane A) werden zumeist aus 30 bis 60 %igen Lösungen verarbeitet, die höhermolekularen Einkomponentenpolyurethane B) aus 20 bis 40 %igen Lösungen.

Die Formaldehydharze C) des Vernetzergemisches entstammen vorzugsweise Formaldehyd-harnstoff- und/oder -melaminharzen, deren Methylolgruppen gegebenenfalls teilweise oder ganz mit Alkoholen, z. B. mit Methanol oder Butanolen, verethert sind.

Bevorzugt sind Melaminalkanolether. Die Harze können lösemittelfrei, gelöst in Wasser oder gelöst in Alkoholen wie Methanol, Butanol, Isobutanol oder anderen vorliegen. Die Konzentration dieser Harzlösungen liegt im allgemeinen zwischen 40 und 80 Gew.-%.

Die Polyisocyanate D) des Vernetzergemisches sind aliphatische und/oder aromatische polyisocyanate und/oder blockierte aromatische Polyisocyanate, welche mindestens zwei NCO-Funktionen, vorzugsweise drei oder mehr NCO-Funktionen aufweisen. Die blockierten oder nicht-blockierten Polyisocyanate können lösungsmittelfrei oder als 30 bis 80 %ige Lösungen, besonders 50 bis 75 %ige Lösungen eingesetzt werden. Als Blockierungsmittel für die Polyisocyanate kommen Ketoxime, wie z. B. Methylethylketoxim, Diisobutylketoxim, ferner H-acide Ester wie Malonester, Acetessigester oder Phenole wie z. B. Phenol, Nonylphenol und andere Blockierungsmittel wie Caprolactam in Frage. Polyisocyanate der genannten Art sind u.a. biuretisierte, gegebenenfalls uretdionhaltige Polyisocyanate aus aliphatischen oder cycloaliphatischen Diisocyanaten wie Hexandiisocyanat und/oder Isophorondiisocyanat, Cyanurate aus Hexandiisocyanat, Isophorondiisocyanat, Toluylendiisocyanat-2,4/2,6 oder gegebenenfalls Gemische aus solchen Polyisocyanaten oder mischpolymerisierten Polyisocyanaten. Ferner sind geeignet Umsetzungsprodukte aus Trimethylolpropan, Glycerin, Pentaerythrit oder anderen Polyolen im Gemisch mit Dialkoholen wie Diethylenglykol, Butandiol-1,4, Dipropylenglykol und anderen Diolen, mit molar überschüssigen Toluylendiisocyanaten, Diphenylmethandiisocyanaten oder ihren Isomerengemischen, ferner Umsetzungsprodukte aus Dialkoholen wie Di- und Triethylenglykol, Di- und Tripropylenglykol mit molar überschüssigen Mengen an Toluylendiisocyanaten oder Diphenylmethandiisocyanaten, einheitlich oder im Gemisch.

Als Celluloseester E) werden Cellulosealkyl- bzw. Mischalkylester, vorzugsweise Celluloseacetobutyrate, eingesetzt.

Als weitere Zusatzmittel in den Zubereitungen werden Griffmittel F) verwendet. Dies sind langkettige, gesättigte und ungesättigte Fettsäureamide, Fettsäureester, Urethane oder Harnstoffe mit langkettigen Fettsäureresten und ähnliche Verbindungen. Beispiele sind Stearinsäureamid, Erucasäureamid, Erucasäure-N-2-hydroxyethylamid, Erucasäure-N-[bis-2-hydroxyethyl]-amid, Stearinsäureisobutylester, Erucasäurehydroxethylester, Ethylenglykol-bis-stearinsäureester, Propylenglykol-1,3-bis-erucasäureester, Propylen-1,2-bis-stearinsäureamid und andere Verbindungen. Ferner sind geeignet: feindisperse Polymere, mit Korngrößen < 10 μm, z. B. Polyolefinpulver wie Polyethylen- oder Polypropylen-pulver, pulverförmige Polyacrylate aus Acryl- und Methacrylsäureacrylestern, gegebenenfalls Mischungen mit Acrylnitril, Acrylamid, N-Methylol-acrylamid, N-Methylen-oxyalkylether, Acrylamiden, Styrol, Divinylbenzol, ferner pulverförmige Polyamide aus Polyamid-66, Polyamid-6, Polyamid-11 und pulverförmige aromatische Polyester z. B. Terephthalsäureester, besonders Polyethylenglykolterephthalat. Ferner sind natürliche und synthetische Wachse geeignet.

Weitere Zusätze in der Zubereitung sind Silikone G), z. B. in Toluol lösliche Polydimethylpolysiloxane, die lösemittelfrei Viskositäten von 100 bis 50 000 mPas/25°C, besonders 500 bis 5000 mPas/25°C, aufweisen. Andere Silikone sind organofunktionelle, z. B. endständig Hydroxyalkylgruppen enthaltende Silikone, die in Wasser oder anderen polaren Lösungsmitteln wie Alkohol oder Dimethylformamid löslich sind. Ferner können die Silikone wäßrig dispergiert sein. Geeignete Silikonderivate sind auch die Polyoxyalkylenpolydimethylsiloxane (Polyethersilikone), welche Oxyalkylensegmente neben Dimethylsiloxansegmenten in linear alternierender, verzweigter oder kammartiger Struktur enthalten.

Den Polyurethanzubereitungen können ferner übliche Zusatzstoffe H) z. B. Pigmente, Füllstoffe, Farbstoffe, Hydrolyse- und Lichtschutzmittel, Oxidationsschutzmittel, Weichmacher, Flammschutzmittel, Fungizide und ähnliche Additive einverleibt werden.

Die Verwendung der beschriebenen Polyurethanbeschichtungszubereitungen in dem Einstrich-Thermo-Umkehrbeschichtungsverfahren erfolgt durch Aufbringen der Beschichtungslösungen auf einen einstweiligen Träger (z. B. (Silikon)Trennpapiere oder (Silikon)Matrizen, welche gegebenenfalls gewünschte Muster aufweisen), Trocknen der Schicht bei erhöhten Temperaturen, vorzugsweise im kontinuierlichen Durchlauf bis 120°C, vorzugsweise 60 bis 80°C, heißem Trockentunnel oder durch Infrarotheizung, Kaschieren des textilen Substrats an 20 bis 160°C, vorzugsweise 80 bis 125°C, heißen Zylindern unter Walzenandruck und anschließendes Ausheizen bei erhöhten Temperaturen, vorzugsweise 120 bis 180°C.

Bevorzugt führt man das Verfahren kontinuierlich mittels Beschichtungsanlagen mit entsprechenden Lieferwerken, Rakeleinrichtungen, Heiz- und Preßzylindern, und Trockentunnels von ca. 2 bis 12, vorzugsweise 4 bis 7 m Länge durch.

Die Auflagemengen auf das textile Substrat liegen üblicherweise zwischen etwa 12 bis 50 g Feststoff, vorzugsweise 15 bis 30 g Feststoff. Am Ende des Verfahrens wird die Beschichtung vom einstweiligen Träger (Trennpapier) getrennt.

**Beispiele**

**Beispiel 1**

Die PUR-Zubereitung zur Herstellung einer Einstrich-Transferbeschichtung nach dem Thermoaktiv-Verfahren ist folgendermaßen zusammengesetzt:

| | | |
|---|---|---|
| 600 g A): | 50 %ige PUR-Lösung in Dimethylformamid (DMF), Methylethylketon (MEK), Toluol (TOL) = 2:1:1 20 000 mPas/25°C | |

[1000 g (0,5 Mol) Ethylenglykol-polyadipat und 1000 g (0,5 Mol) Diethylenglykol-polyadipat werden in der Schmelze mit 230 g (1.32 Mol) Toluylendiisocyanat-2,4/2,6 (Isomerengemisch 80/20) bei 100°C zu einem NCO-Prepolymeren umgesetzt; nach Zugaben von 1130 g DMF, 565 g MEK, 565 g TOL und 31,8 g (0,30 Mol) Diethylenglykol wird bei 80°C die Polyaddition in Lösung weitergeführt; mit 1,5 g N-Methylethanolamin wird die weitere Viskositätszunahme der PUR-Lösung gestoppt]

300 g B): 30 %ige Einkomponenten-Polyurethan-Lösung in DMF/MEK 2:1, 25 000 mPas/25°C;

[2000 g (1,0 Mol) Butandiol-1,4-adipat, 217 g (3.50 Mol) Ethylenglykol und 1130 g (4.52 Mol) 4,4'-Diphenylmethandiisocyanat werden bei 80°C in 5200 g DMF polyaddiert, nach Verdünnen der Lösung mit 2600 g MEK wird der weitere Viskositätsanstieg durch Zusatz von 2,5 g Dibutylamin gestoppt].

10 g Celluloseacetobutyrat

2 g Erucasäureamid

10 g oxethyliertes Dimethylpolysiloxan

15 g flüssiges Melaminharz, lösemittelfrei (Melaminhexamethylolether)

3 g Katalysatorlösung, 30 %ig

[190 g p-Toluolsulfonsäure, 101 g N-Methylmorpholin, 709 g DMF]

10 g Polyisocyanat, 75 %ig in Ethylacetat, mit ca. 13 % NCO-Gehalt [hergestellt aus Trimethylolpropan, Butandiol-1,3 und Toluylendiisocyanat-2,4/2,6 (Isomerengemisch 65/35)]

50 g MEK

─────────

1000 g

Die PUR-Zubereitung ist 43 %ig, ihre Viskosität beträgt 18 000 mPas/25°C.

Nach Zusatz von 10 Gew.-% einer 40 % $TiO_2$ enthaltenden Anpastung in Dioctylphthalat wird auf ein glattmattes Trennpapier ein Film von 70 g/m² Naßauflage gerakelt. Bei 60-80°C wird im 1. Kanal einer Tandembeschichtungsanlage das Lösemittelgemisch verdampft. An einem auf 120°C geheizten Zylinder, zwischen 1. und 2. Kanal installiert, wird der PUR-Film "thermisch aktiviert" und mit einen pES-Gewebe von 120 g/m² Warengewicht unter Andruck von 5 bar kaschiert. Bei der Passage durch den 2. Kanal, 120/140/160°C, wird das PUR-System vernetzt. Man erhält einen leichten, weichen Beschichtungsartikel, dessen Auflage nur 25 g/m² beträgt, von angenehm geschmeidigem Griff. Die Trocken- und Naßhaftung bei "Mischvernetzung" mit Harz und Polyisocyanat ist wesentlich besser als bei alleiniger Verwendung der Einzelvernetzer.

Trocken- und Naßhaftung in N/2,5 cm

| Vernetzer | | Trockenhaftung | Naßhaftung |
|---|---|---|---|
| 1,5 % Melaminharz (Vergleich) | | 12-15 | 8-10 |
| 2,5 % Melaminharz | | 12-17 | 8-10 |
| 1,0 % Polyisocyanat (Vergleich) | | 12-15 | 10-12 |
| 2,5 % Polyisocyanat | | 15-18 | 10-15 |
| 1,5 % Melaminharz | erfindungsgemäß- | 25-30 | 20-28 |
| 1,0 % Polyisocyanat | " | | |

PES = Polyester (Polyethylenterephthalat)
PUR = Polyurethan

**Beispiel 2**

PUR-Zubereitung zur Herstellung einer Einstrich-Transferbeschichtung, Konzentration: 37,7 %, Viskosität: 8000 mPas/25°C, aus:

500 g A): 50 %ige PUR-Lösung in DMF, 40 000 mPas/25°C; hergestellt wie folgt:

[810 g (0,90 Mol) Butandiol-1,4-polyadipat, 170 g (0,10 Mol) Mischpolyadipat aus 1,6-Hexandiol/Neopentylglykol (7:3) und 45 g (0,50 Mol) Butandiol-1,4 werden mit 265 g (1,52 Mol) Toluylen-diisocyanat-2,4/2,6 (Isomerengemisch 80/20) in 1290 g DMF bei 70-80°C polyaddiert. Die Reaktion wird durch Zugabe von 2,0 g Butanonoxim abestoppt].

300 g B): 25 %ige Lösung eines Einkomponenten-Polyurethan-Granulats in DMF, 10 000 mPas/25°C;

[1000 g (0,5 Mol) Butandiol-1,4-polyadipat. 1000 g (0,5 Mol) Hexandiol-1,6-polycarbonat, 2270 g

(3,0 Mol) Butandiol-1,4 und 1000 g (4,0 Mol) 4,4'-Diphenylmethandiisocyanat werden in einer Reaktionsschnecke in der Schmelze zum Polyurethan polyaddiert und unter Abkühlung granuliert].

| | |
|---|---|
| 10 g | Cellulose-acetobutyrat |
| 4 g | Ethylenglykol-Fettsäureester mit Gemisch aus $C_{15}$-$C_{21}$-Fettsäuren |
| 10 g | 70 %ige Dispersion eines Dimethylpolysiloxans in Wasser |
| 20 g | Melaminharz, lösemittelfrei |
| 3 g | Katalysator 29 %ig in DMF (wie in Beispiel 1) |
| 5 g | Polyisocyanat, NCO-Gehalt ca. 20 % (Biuretisiertes Hexandiisocyanat-1,6) |
| 10 g | Polyisocyanat, trimerisiertes Hexandiisocyanat-1,6, blockiert mit Butanonoxim, 70 %ig in DMF, NCO-Gehalt ca. 10 % |
| 138 g | DMF |

1000 g

1000 g dieser PUR-Zubereitung werden mit 100 g einer handelsüblichen Pigmentpaste eingefärbt. Man rakelt auf ein Trennpapier einen Naßfilm von 60 g/m², trocknet im 1. Kanal einer Beschichtungsanlage bei 60-70° C. An einem heizbaren Stahlzylinder zwischen 1. und 2. Kanal, wird der PUR-Film bei 125°C thermisch aktiviert (Verweilzeit an der Walze 5-6 sec). Durch Koagulation mit DMF-PUR-Lösung vorbehandeltes Baumwoll-Rauhgewebe, ein sogenanntes Koagulat-Substrat, wird zukaschiert, mit einem Presseur bei 5 bar angedrückt; die Vernetzung des Polyurethans wird in der 2. Kanalpassage bei 150-160°C in 1,5-2 min. herbeigeführt. Der Artikel mit einer PUR-Deckstrichauflage von 20 g/m² zeigt guten Narbenwurf, ist füllig und weich im Griff: Die Werte der Trocken- und Naßhaftung sind ausgezeichnet: 38 N/2,5 cm bzw. 35 N/2,4 cm.

**Beispiel 3**

PUR-Zubereitung zur Herstellung einer Einstrich-Transferbeschichtung, Konzentration: 40,0 %, Viskosität: 12 000 mPas/25°C, aus:

| | |
|---|---|
| 600 g A): | 45 %ige Zweikomponenten-Polyurethan-Lösung von DMF, 25 000 mPas/25°C; [720 g (0,90 Mol) Hexandiol-1,6-polyadipat, 170 g (0,10 Mol) Mischpolyadipat aus 1,6-Hexandiol, Neopentylglykol (7:3), 48,0 g (0,54 Mol) Butandiol-1,4 werden in 500 g DMF mit 268 g (1,54 Mol) Toluylendiisocyanat-2,4/2,6 (Isomerengemisch 80/20) bei 70-80°C umgesetzt, schließlich wird mit weiteren 980 g DMF die Konzentration eingestellt und die Polyadditionsreaktion durch Zusatz von 3,0 g Butanonoxim beendet]. |
| 80 g B): | PUR-Granulat auf Basis eines Einkomponentenpolyurethans, hergestellt wie folgt: [1000 g (0,5 Mol) Butandiol-1,4-polyadipat, 113 g (1,25 Mol) Butandiol-1,4, 78,0 g (1,25 Mol) Ethylenglykol und 750 g (3,0 Mol) 4,4'-Diphenylmethandiisocyanat werden in einer Reaktionsschnecke in der Schmelze zum PUR polyaddiert und unter Abkühlung granuliert. Die 25 %ige Lösung des PUR in DMF/TOL/MEK-1:1:1 hat eine Viskosität von 10 000 mPas/25°C]. |
| 12 g | Celluloseacetobutyrat |
| 4 g | Polyethylacrylat-Pulver, vernetzt |
| 16 g | oxethyliertes Dimethylpolysiloxan (50 %ig in Toluol) |
| 25 g | Melaminharz, 70 %ig in Isobutanol (wie in Beispiel 1) |
| 10 g | Blockiertes Polyisocyanat (Cyanurat aus Hexandiisocyanat-1,6 (1,0 Mol) und Toluylendiisocyanat-2,4/2,6 (Isomerengemisch 65/35) (2,0 Mol), blockiert mit einem Gemisch aus Malonsäurediethylester/Acetessigsäureethylester (2:1), 50 %ig in Butylacetat, Ethylglykolacetat, Xylol, NCO-Gehalt ca. 8 %. |
| 3 g | Katalysator-Lösung der Zusammensetzung: [190 g p-Toluolsulfonsäure, 149 g Triethanolamin, 661 g DMF] |
| 125 g | Toluol |
| 125 g | Methylethylketon |

1000 g

Nach Pigmentieren der PUR-Zubereitung mit 10 % einer handelsüblichen Pigmentpaste nach Beispiel 1 wird ein auf Trennpapier erzeugter Deckstrich (20 g/m² Trockenauflage), nach den in den Beispielen 1 und 2 beschriebenen Thermoaktiv-Verfahren mit einem Zellwollgewebe von 100 g/m² kaschiert und durch Ausheizen versetzt. Man erhält einen leichten Oberbekleidungsartikel von gefällig gleitendem Griff und sehr guter Trockenhaftung (30 N/2,5 cm) und Naßhaftung (25 N/2,5 cm).

In einer anderen Ausführungsform kann der bei 50-60°C im 1. Tunnel der Beschichtungsanlage getrocknete Deckstrich am Stahlzylinder mit dem obengenannten Zellwollgewebe bei 20°C kaschiert werden; Andruck 5 bis 6 bar. Die Vernetzung erfolgt in der 2. Trockentunnelpassage bei 150 bis 160°C in 1,5 bis 2 min.

**Beispiel 4**

PUR-Zubereitung für Einstrich-Transferbeschichtung (Thermoaktivierung)
Konzentration: ca. 55 %
Viskosität: 18 000 mPas/25°C

700 g A:  50 %ige aliphatische Zweikomponentenpolyurethan-Lösung in Toluol/Isopropanol/Ethylglykol = 45:35:20, 40 000 mPas/25°C; hergestellt wie folgt:
[2000 g (1,0 Mol) Diethylenglykolpolyadipat, 285 g (1,29 Mol) Isophorondiisocyanat, 65 g (0,39 Mol) Hexandiisocyanat werden in 1070 g Toluol bei 100-110°C zu einem NCO-Prepolymer umgesetzt. Nach Abkühlen auf 20-25°C läßt man unter gutem Rühren eine Lösung von 34,0 Hydrazinhydrat in 830 g Isopropanol zur Prepolymerlösung fließen. Die PUR-Harnstofflösung nimmt schnell an Viskosität zu, man verdünnt mit 475 g Ethylglykol und stoppt die Reaktion durch Zugabe von 2 g Diethanolamin ab].

150 g B:  Aliphatisches Einkomponenten-Polyurethan-Granulat
[1000 g (0,5 Mol) Butandiol-1,4-polyadipat, 300 g (1,35 Mol) Isophorondiisocyanat werden in einer Reaktionsschnecke in der Schmelze zum Prepolymer umgesetzt. Nach Einspeisen von 178 g (0,85 Mol) 4,4'-Diamino-dicyclohexyl-methan wird in der Schmelze der Polyurethan-Harnstoff aufgebaut; es folgt Extrusion, Abkühlen, Granulieren. Die 25 %ige Lösung des Granulats in Toluol/Isopropanol/Ethylglykol hat eine Viskosität von 12 000 mPas/25°C].

10 g  Celluloseacetobutyrat in 50 %iger MEK-Lösung
10 g  Polyethylenpulver
10 g  Dimethylpolysiloxan in 50 %iger TOL-Lösung
25 g  Melaminharz, 70 %ig in Isobutanol (wie Beispiel 1)
10 g  blockiertes Polyisocyanat, Cyanurat aus Hexandiisocyanat-1,6, blockiert mit einem Gemisch aus Malonsäurediethylester/Acetessigsäureethylester (2:1), 75 %ig in Ethylglykolacetat/Xylol (3:2), NCO-Gehalt ca. 10 %
5 g  Katalysator wie Beispiel 3
40 g  Toluol
40 g  Ethylglykol
_____
1000 g

Gefärbtes PES/BW-Gewebe von 120 g/m² Warengewicht wird nach dem Thermotransferverfahren mit einem unpigmentierten Deckstrich-Film aus der obigen PUR-Zubereitung von 20 g/m² kaschiert und vernetzt. Man erhält einen leichten, optisch durch das gefärbte Gewebe charakterisierten Beschichtungsartikel, der sich durch Lichtechtheit und angenehm gleitenden Griff auszeichnet. Trockenhaftung: 35 N/2,5 cm, Naßhaftung: 28 N/2,5 cm.


**Beispiel 5**

PUR-Zubereitung für Einstrich-Transferbeschichtung (Thermoaktivierung)
Konzentration: ca. 46 %
Viskosität: 15 000 mPas/25°C
Zusammensetzung der PUR-Zubereitung:.

650 g A):  50 %ige Polyurethanharnstoff-Lösung in DMF/TOL/IPA (Isopropylalkohol) = 50/30/20; 35 000 mPas/25°C;
hergestellt wie folgt:
[2000 g (1,0 Mol) Dihydroxypropylenglykol-polyether werden mit 295 g (1,70 Mol) Toluylendiisocyanat-2,4/2,6 (Isomerengemisch 80/20) in der Schmelze bei 100°C zu einem NCO-Prepolymeren umgesetzt. Nach Lösen des Prepolymeren in 710 g Toluol und 1000 g DMF fügt man 37,5 g (0,5 Mol) N-Methylethanolamin in 180 g DMF bei 40°C hinzu, polyaddiert bei 80°C und rührt dann bei 20-30°C eine Lösung von 34,0 g (0,2 Mol) Isophorondiamin in 475 g Isopropanol ein. Die Polyadditionsreaktion wird durch Zugabe von 3,0 g Butanonoxim abgestoppt].

275 g B):  30 %ige aliphatische PUR-Harnstofflösung in DMF/TOL/IPA = 50/25/25, 12 000 mPas/25°C;
hergestellt wie folgt:
[2000 g (1,0 Mol) Dihydroxy-oxytetramethylenpolyether, 135 g (1,5 Mol) Butandiol-1,4 und 820 g (3,7 Mol) Isophorondiisocyanat werden in der Schmelze bei 100-110°C zu einem NCO-Prepolymer umgesetzt. Nach dem Lösen in 3500 g DMF und 1750 g TOL fügt man bei 20°C eine Lösung von 103 g (1,20 Mol) Piperazin in 1750 g Isopropanol hinzu. Die Polyadditionsreaktion wird schließlich durch Zusatz von 3 g Propanolamin abgebrochen].

10 g  Celluloseacetobutyrat in DMF, 50 %ig

| 10 g | Polyamid-Pulver (aus Polyamid-6,6) |
|---|---|
| 10 g | Dimethylpolysiloxan in Toluol, 50 % |
| 25 g | Melaminharz, lösemittelfrei |
| 15 g | blockiertes Polyisocyanat aus Tripropylenglykol (1,0 Mol) 4,4'-Diphenylmethandiisocyanat (5,0 Mol) und Butanonoxim (8,0 Mol) 50 %ig in MEK/Ethylglykolacetat = 1:1, NCO-Gehalt ca. 10 %. |
| 5 g | Katalysatorlösung in DMF, 53 %ig [19,0 g p-Toluolsulfonsäure, 34,0 g N-Methylstearyl-β-oxypropylamin, 47 g DMF]. |

_____

1000 g

In die PUR-Zubereitung werden 10 % handelsübliche Pigmentpaste und 2 % fein disperse Kieselsäure als Mattierungsmittel eingerührt.

Nach der in den vorangegangenen Beispielen beschriebenen Technik wird ein thermoaktiver Deckstrich von 25 g/m$^2$ auf Trennpapier hergestellt und mit einer bi-elastischen Wirkware aus Polyacrylfaser (150 g/m$^2$) kaschiert. Man erhält einen fülligen Artikel mit angenehm trockenem Griff.

Trockenhaftung: 25 N/2,5 cm, Naßhaftung: 23 N/2,5 cm.

**Patentansprüche**

1. Lösungsmittelhaltige, Vernetzerkombinationen enthaltende Polyurethanbeschichtungszubereitungen, dadurch gekennzeichnet, daß der Feststoffgehalt der 20-60 Gew.-% Zubereitungen in organischen Lösungsmitteln aus folgenden Komponenten besteht:

I) 60 bis 97,5 Gew.-Teile eines Polyurethangemisches aus

A) 90 bis 60 Gew.-%, bezogen auf I, eines relativ weichen, nur mäßig hochmolekularen, im wesentlichen linearen Polyurethans und

B) 10 bis 40 Gew.-% eines hochmolekularen, relativ harten Einkomponentenpolyurethans,

II) 2,5 bis 15 Gew.-Teile einer Vernetzerkombination aus

C) 10 bis 60 Gew.-%, bezogen auf II, Formaldehydharze und Vernetzungskatalysatoren und

D) 90 bis 40 Gew.-% aliphatischer und/oder aromatischer, unblockierter oder blockierter Polyisocyanate mit mindestens 2 Isocyanatfunktionen und gegebenenfalls

III) Zusätzen aus

E) 0 bis 10 Gew.-Teile, vorzugsweise 0,1 - 5 Gew.-Teile, Celluloseester

F) 0 bis 5 Gew.-Teile, vorzugsweise 0,3 - 3 Gew.-Teile, Griffmittel

G) 0 bis 5 Gew.-Teile, vorzugsweise 0,1 - 3,5 Gew.-Teile, Silikone und

H) 0 bis 20 Gew.-Teile Pigmente, Füllstoffe, Stabilisatoren und weitere, übliche Zusätze.

2. Polyurethanbeschichtungszubereitungen nach Anspruch 1, dadurch gekennzeichnet, daß 4-10 Gew.-Teile der Komponente II eingesetzt werden.

3. Polyurethanbeschichtungszubereitungen nach Anspruch 1 oder 2, dadurch gekennzeichnet, daß sich die Komponente I aus

70 bis 80 Gew.-% der Komponente A) und

20 bis 30 Gew.-% der Komponente B) und die

Komponente II aus

40 bis 80 Gew.-% der Komponenten C und

20 bis 60 Gew.-% der Komponente D zusammensetzt.

4. Polyurethanbeschichtungszubereitungen nach Ansprüchen 1 bis 3, dadurch gekennzeichnet, daß als

Komponente A) Polyurethane aus Hydroxypolyestern und/oder -polyethern mit einem Molekulargewicht von 600 bis 6000, aromatischen und/oder aliphatischen Polyisocyanaten und 0 bis 1,5 Mol Dialkoholen und/oder Aminalkoholen und/oder Diaminen und/oder Hydrazinhydrat und/oder Dihydrazidverbindungen pro Mol Polyester/Polyether als Kettenverlängerer, als

Komponente B) Einkomponentenpolyurethane aus Hydroxypolyestern und/oder -polyethern mit einem Molgewicht von 600 bis 6000, aromatischen und/oder aliphatischen Polyisocyanaten und > 1,5 bis 6,0 Molen Dialkohole und/oder Aminoalkohole und/oder Diamine und/oder Hydrazinhydrat und/oder Dihydrazidverbindungen pro Mol Polyester/Polyether als Kettenverlängerer als

Komponente C) ein Formaldehyd-Harnstoff- und/oder ggf. verethertes Melamin-Formaldehydharz und Vernetzungskatalysatoren, als

Komponente D) vorzugsweise mit H-aciden Estern und/oder Oximen blockierte Polyisocyanate mit mindestens zwei Isocyanatfunktionen, als

Komponente E) Celluloseacetobutyrate

und als

Komponente F) langkettige, gesättigte und/oder ungesättigte Fettsäureamide und/oder -ester, Urethane oder Harnstoffe mit langkettigen Fettsäureestern, feindisperse Polyolefine, pulverförmige Polyacrylate, Polyamide und/oder Polyester und als

Komponente G) Polydimethylsiloxane, Hydroxyalkylpolydiethylsiloxane oder Polyethersilikone

# 0 125 464

eingesetzt werden.

5. Polyurethanbeschichtungszubereitungen nach Ansprüchen 1-4, dadurch gekennzeichnet, daß als organische Lösungsmittel Mischungen aus Dimethylformamid und Methylethylketon oder Essigester und ggf. Toluol oder Xylol oder Mischungen aus Toluol und Isophopanol eingesetzt werden.

6. Polyurethanbeschichtungszubereitungen nach Ansprüchen 1-5, dadurch gekennzeichnet, daß bei der Herstellung der Komponente A) ein NCO/XH-Verhältnis von < 0,98, vorzugsweise < 0,96 eingehalten wurde, wobei XH die gegenüber NCO reaktiven Gruppen mit aktiven Wasserstoff darstellen, und bei der Herstellung der Komponente B) ein NCO/XH-Verhältnis von ≥ 0,98 - 1,08, vorzugsweise 1,0 - 1,05 eingehalten wurde.

7. Polyurethanbeschichtungszubereitungen nach Ansprüchen 1-6, dadurch gekennzeichnet, daß der Feststoffgehalt der Zubereitungen 30 - 50 % beträgt.

8. Verfahren zur Herstellung von Polyurethanbeschichtungen nach dem Einstrich-Thermo-Umkehrverfahren durch Aufbringen von Polyurethanbeschichtungszubereitungen auf einem einstweiligen Träger, Trocknen der Schicht und Kaschieren des textilen Substrats an vorzugsweise beheizten Preßwalzen und anschließendem Ausheizen bei erhöhten Temperaturen, dadurch gekennzeichnet, daß als Polyurethanbeschichtungszubereitungen Zubereitungen nach Ansprüchen 1-7 eingesetzt werden.

## Claims

1. Polyurethane coating compositions containing solvents and combinations of crosslinking agents, characterised in that the solids content of the 20-60 % by weight compositions in organic solvents consists of the following components:

1) 60 to 97.5 parts by weight of a polyurethane mixture of
A) 90 to 60 % by weight, based on I, of a relatively soft, only moderately high molecular weight, substantially linear polyurethane and
B) 10 to 40 % by weight of a high molecular weight, relatively hard one-component polyurethane,
II) 2.5 to 15 parts by weight of a combination of crosslinking agents consisting of
C) 10 to 60 % by weight, based on II, of formaldehyde resins and crosslinking catalysts and
D) 30 to 40 % by weight of aliphatic and/or aromatic, unblocked or blocked polyisocyanates containing at least 2 isocyanate functions and, optionally,
III) additives consisting of
E) 0 to 10 parts by weight, preferably 0.1 - 5 parts by weight of cellulose esters,
F) 0 to 5 parts by weight, preferably 0.3 - 3 parts by weight of handle-improving agents,
G) 0 to 5 parts by weight, preferably 0.1 - 3.5 parts by weight of silicones and
H) 0 to 20 parts by weight of pigments, fillers, stabilisers and other customary additives.

2. Polyurethane coating compositions according to Claim 1, characterised in that 4-10 parts by weight of component II are used.

3. Polyurethane coating compositions according to Claim 1 or 2, characterised in that
component I is composed of
70 to 80 % by weight of component A) and
20 to 30 % by weight of component B) and
component II is composed of
40 to 80 % by weight of components C and
20 to 60 % by weight of component D.

4. Polyurethane coating compositions according to Claims 1 to 3, characterised in that
polyurethanes obtained from hydroxy polyesters and/or polyethers with a molecular weight of 600 to 6000, aromatic and/or aliphatic polyisocyanates and 0 to 1.5 moles of dialcohols and/or aminoalcohols and/or diamines and/or hydrazine hydrate and/or dihydrazide compounds per mole of polyester/polyether as chain-extending agent, are used as component A), one-component polyurethanes obtained from hydroxy polyesters and/or polyethers with a molecular weight of 600 to 6000, aromatic and/or aliphatic polyisocyanates and > 1.5 to 6.0 moles of dialcohols and/or aminoalcohols and/or diamines and/or hydrazine hydrate and/or dihydrazide compounds per mole of polyester/polyether as chain-extending agent, are used as component B),
a formaldehyde-urea and/or optionally etherified melamine-formaldehyde resin and crosslinking catalysts are used as component C),
polyisocyanates which have at least two isocyanate functions and are preferably blocked with H-acid esters and/or oximes are used as component D),
cellulose acetobutyrates are used as component E) and long-chain, saturated and/or unsaturated fatty acid amides and/or esters, urethanes or ureas with long-chain fatty acid esters, finely disperse polyolefins, pulverulent polyacrylates, polyamides and/or polyesters are used as component F) and
polydimethyl siloxanes, hydroxyalkyl polydiethyl siloxanes or polyether silicones are used as component G).

5. Polyurethane coating compositions according to Claims 1-4, characterised in that mixtures of dimethyl formamide and methyl ethyl ketone or ethyl acetate and optionally toluene or xylene or mixtures of toluene and isophopanol are used as the organic solvents.

6. Polyurethane coating compositions according to Claims 1-5, characterised in that an NCO/XH ratio of <

9

0.98, preferably < 0.96 was maintained in the production of component A), XH representing the groups containing active hydrogen which are reactive towards NCO, and an NCO/XH ratio of ⩾ 0.98 - 1.08, preferably 1.0 - 1.05, was maintained in the production of component B).

7. Polyurethane coating compositions according to Claims 1-6, characterised in that the solids content of the compositions is 30 - 50 %.

8. Process for the production of polyurethane coatings by the one-coat thermo-reverse process by applying polyurethane coating compositions to a temporary support, drying the layer and laminating the textile substrate on preferably heated pressure rollers and subsequently completely curing at elevated temperatures, characterised in that compositions according to Claims 1-7 are used as the polyurethane coating compositions.

**Revendications**

1. Préparations d'enduction à base de polyuréthanne contenant des solvants et renfermant des associations d'agents réticulants, caractérisées en ce que la teneur en matières solides des préparations à 20-60 % en poids dans des solvants organiques est constituée des composants suivants:

I) 60 à 97,5 parties en poids d'un mélange de polyuréthannes formé

A) de 90 à 60 % en poids, par rapport à I, d'un polyuréthanne principalement linéaire relativement mou, de poids moléculaire modérément élevé seulement et

B) de 10 à 40 % en poids d'un polyuréthanne à un seul composant de haut poids moléculaire, relativement dur,

II) 2,5 à 15 parties en poids d'une association d'agents réticulants comprenant

C) 10 à 60 % en poids, par rapport II, de résines de formaldéhyde et de catalyseurs de réticulation et

D) 90 à 40 % en poids de polyisocyanates aliphatiques et/ou aromatiques, non protégés ou protégés, ayant au moins deux fonctions isocyanate, et le cas échéant

III) des additifs formés

E) de 0 à 10 parties en poids, de préférence 0,1 à 5 parties en poids, d'esters cellulosiques

F) de 0 à 5 parties en poids, de préférence 0,3 à 3 parties en poids, d'agents améliorant le toucher

G) de 0 à 5 parties en poids, de préférence 0,1 à 3,5 parties en poids, de silicones et

H) de 0 à 20 parties en poids de pigments, de charges, d'agents stabilisants et d'autres additifs classiques.

2. Préparations d'enduction à base de polyuréthannes suivant la revendication 1, caractérisées en ce qu'on utilise 4 à 10 parties en poids du composant II.

3. Préparations d'enduction à base de polyuréthannes suivant la revendication 1 ou 2, caractérisées en ce que

le composant I est formé

de 70 à 80 % en poids du composant A) et

de 20 à 30 % en poids du composant B) et

le composant II est formé

de 40 à 80 % en poids des composants C et

de 20 à 60 % en poids du composant D.

4. Préparations d'enduction à base de polyuréthannes suivant les revendications 1 à 3, caractérisées en ce qu'on utilise

comme composant A), des polyuréthannes dérivés d'hydroxypolyesters et/ou -polyéthers ayant un poids moléculaire de 600 à 6000, de polyisocyanates aromatiques et/ou aliphatiques et de 0 à 1,5 mole de dialcools et/ou d'aminoalcools et/ou de diamines et/ou d'hydrates d'hydrazine et/ou de composés dihydrazidiques par mole de polyester/polyéther, comme agent d'allongement de chaîne,

comme composant B), des polyuréthannes à un seul composant dérivés d'hydroxypolyesters et/ou-polyéthers ayant un poids moléculaire de 600 à 6000, de polyisocyanates aromatiques et/ou aliphatiques et de moins de 1,5 à 6,0 moles de dialcools et/ou d'aminoalcools et/ou de diamines et/ou d'hydrate d'hydrazine et/ou de composés dihydrazidiques par mole de polyester/polyéther comme agents d'allongement de chaîne,

comme composant C), une résine urée-formaldéhyde et/ou mélamine-formaldéhyde éventuellement éthérifiée et des catalyseurs de réticulation,

comme composant D), de préférence des polyisocyanates protégés avec des esters et/ou des oximes à hydrogène acide, avec au moins deux fonctions isocyanate,

comme composant E), des acétylbutyrates de cellulose et

comme composant F), des amides et/ou des esters d'acides gras saturés et/ou non saturés à longue chaîne, des uréthannes ou des urées avec des esters d'acides gras à longue chaîne, des polyoléfines en fine dispersion, des polyacrylates en poudre, des polyamides et/ou des polyesters et

comme composant C), des polydiméthylsiloxanes, des hydroxyalkylpolydiéthylsiloxanes, ou des polyéthersilicones.

5. Préparations d'enduction à base de polyuréthannes suivant les revendications 1 à 4, caractérisées en ce qu'on utilise comme solvants organiques des mélanges de diméthylformamide et de méthyéthylcétone ou d'acétate d'éthyle et, le cas échéant, de toluène ou de xylène ou des mélanges de toluène et d'isopropanol.

6. Préparations d'enduction à base de polyuréthannes suivant les revendications 1 à 5, caractérisées en ce que lors de la production du composant A), un rapport NCO/XH inférieur à 0,98, de préférence inférieur à 0,96, a été maintenu, XH représentant les groupes porteurs d'hydrogène actif pouvant réagir vis-à-vis de NCO, et lors de la production du composant B), un rapport NCO/XH allant d'une valeur supérieure ou égale à 0,98 à une valeur de 1,08, de préférence de 1,0 à 1,05, a été maintenu.

7. Préparations d'enduction à base de polyuréthannes suivant les revendications 1 à 6, caractérisées en ce que la teneur en matières solides des préparations va de 30 à 50 %.

8. Procédé de production de revêtements à base de polyuréthanne par le procédé thermique d'enduction par transfert, par application de préparations d'enduction à base de polyuréthannes sur un support provisoire, séchage de la couche et doublage du substrat textile sur des cylindres presseurs de préférence chauffés, suivi d'un chauffage à des températures élevées, caractérisé en ce qu'on utilise comme préparations d'enduction à base de polyuréthannes des préparations suivant les revendications 1 à 7.